# EUROPEAN PATENT APPLICATION

(11) **EP 1 681 619 A1**
(43) Date of publication of application: **19.07.2006**
(21) Application number: 05000909.1
(22) Date of filing: 18.01.2005
(51) Int. Cl.: G06F 3/033

(54) **System for real-time identifying and recording laser manuscript**

(71) Applicant: TOPSEED TECHNOLOGY CORP., Chung Ho City, Taipei Hsien, Taiwan (CN)
(72) Inventor: Chen, Shoei-Lai c/o Topseed Technology Corp., Chung Ho City Taipei Hsien Taiwan 235 (CN)
(74) Representative: Urner, Peter

(57) **Abstract**

A system for real-time identifying and recording laser manuscript, having a hand-held control unit having at least an indication control key and a marking control key, a central processing device having a receiving control device, an image extraction device connected to the central processing device, a projection device connected to the central processing device, and a display device positioned with respect to the projection device.

## Description

### BACKGROUND OF THE INVENTION

The present invention relates in general to a system for real-time identifying and recording laser manuscript, and more particularly, to a system using a laser beam projected on a displayed brief for indication or making marking or note manually, and an image extraction device to extract the marking or note in a real time, such that the manuscript made on the briefing during a meeting can be easily saved in a more convenient way with less cost.

Traditionally, briefings of seminars or conferences are edited and printed on transparencies and displayed by a projector to allow the attendee or audience to easily understand the content of the briefings. Alternatively, the briefings may also be made in slide films for display. Either the transparencies or the slide films have to be stored in order and sequentially placed on and removed from the projector. In addition, it is very inconvenient for recording the marking or note made during the presentation.

Recently, the briefing system has been integrated into computer system. By connecting the computer system with the projector and the display screen, the briefing can be easily presented during the meeting. The display of the briefing can also be remotely controlled by using a remote control. The reporter can also use a laser optical pen for indicating any specific content of the displayed briefing. However, should any marking or note be made during presentation, such marking or note can not be saved in the briefing system by the conventional computer briefing system.

### BRIEF SUMMARY OF THE INVENTION

To resolve the drawbacks of the conventional briefing system, a system for real-time identifying and recording laser manuscript is provided. The system includes a hand-held control unit operative to generate a laser beam to point at specific content of a displayed briefing. The locus of the laser beam can be extracted by an image extraction device and processed by a central processing device into text, graph or a combination of these two. The processed image can then be saved in the central processing device and displayed in real time.

The system as provided comprises a hand-held control unit having at least an indication control key and a marking control key, a central processing device having a receiving control device, an image extraction device connected to the central processing device, a projection device connected to the central processing device, and a display device positioned with respect to the projection device. The hand-held control unit operative to generate a laser beam and/or a control signal, depending on the control key that has been pressed. When the control signal is received by the central processing unit, the projection device. When the control signal contains instruction of displaying a prestored image only, the projection device is activated to project the image on the display device. When the control contains instruction of displaying the image and extracting the image as well as marking made by the laser beam, the extraction device is activated to extract both the image and an optical locus of the laser beam. The extracted image and optical locus are processed by the central processing device to form text, graph or a combination thereof and stored therein.

### BRIEF DESCRIPTION OF THE DRAWINGS

These as well as other features of the present invention will become more apparent upon reference to the drawings therein:
Figure 1 shows the structure of a system for real-time identifying and recording a laser manuscript;
Figure 2 shows a block diagram of the electronic circuit of the system;
Figure 3 shows process for setting up the system;
Figure 4 shows operation process of the system;
Figure 5 shows an embodiment using the laser beam for marking manually; and
Figure 6 shows an embodiment for projecting the laser manuscript of marking on the display device.

### DETAILED DESCRIPTION OF THE INVENTION

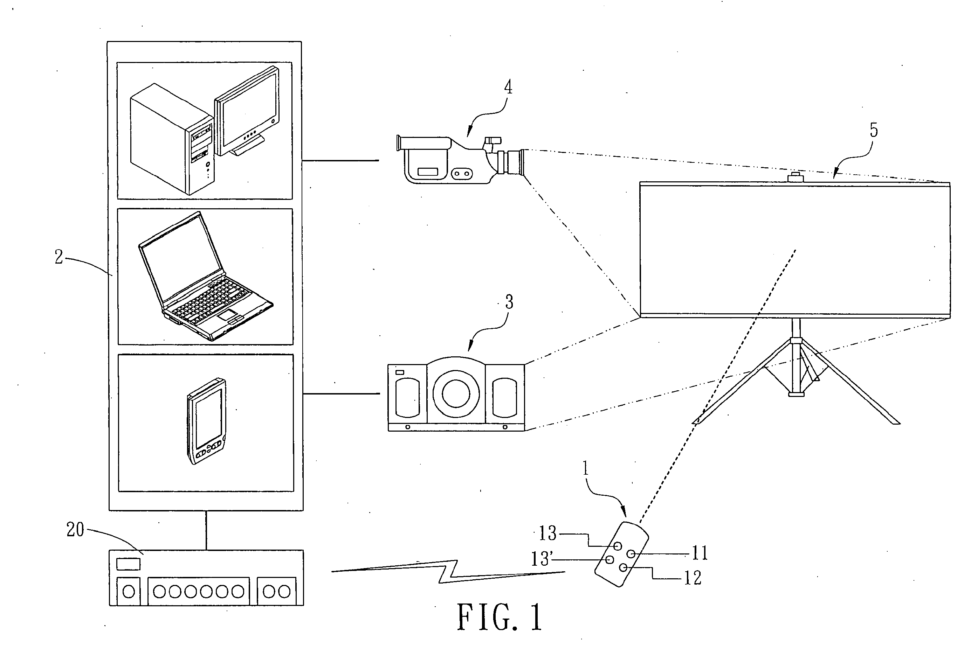

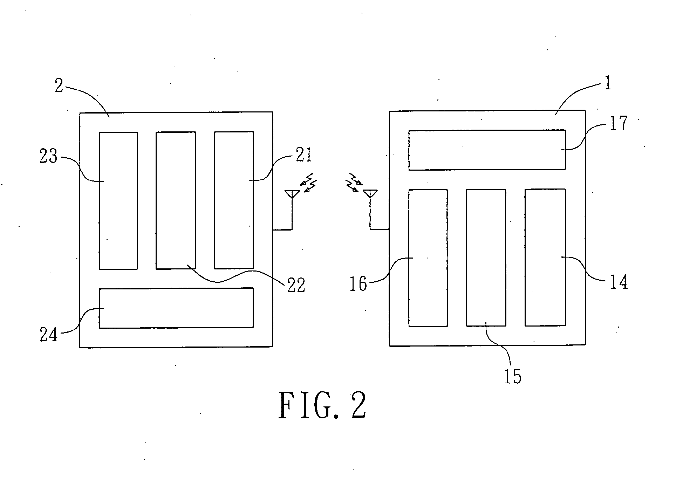

Figures 1 and 2 illustrate the structure of a real-time hand-writing identifying and recording laser system, which includes a hand-held control unit 1, a central processing device 2, a projection device 3, an image extraction device 4 and a display device 5. The hand-held control unit 1 is operative to generate and transmit a control signal, and the central processing device 2 includes a receiving control module for receiving the control signal, so as to perform signal process and calculation according to the control signal.

The hand-held control unit 1 includes a hand-held remote control for generating a laser beam. In one embodiment, the remote control includes two control keys, which are the indication control key 11 for controlling transmission of the laser beam and the marking control key 12 for activating real-time identifying and recording the manuscript. By pressing the control keys 11 and/or 12, a control signal is generated and transmitted to the central processing device 2 via the wireless transmitting circuit 16, so as to performing signal processing and operation control.

The hand-held unit 1 may further comprise other function keys 13 and 13' for scrolling back and forth the projected data image.

Figure 2 provides the block diagram showing the circuit of the hand-held control unit 1 and the central processing device 2. As shown, the hand-held control unit 1 includes a control interface circuit 14, a system control circuit 15, a wireless communication circuit 16 and a laser optical pen circuit 17. The control interface circuit 14 connects the control keys 11, 12, 13 and 13' to obtain the operation commands, so as to generate the control signal corresponding to the operation commands. The control signal is then transmitted by the wireless communication circuit 16. In addition, the laser optical pen circuit 17 can be activated to generate a laser beam pointing at the display device 5 for indication or perform manual marking.

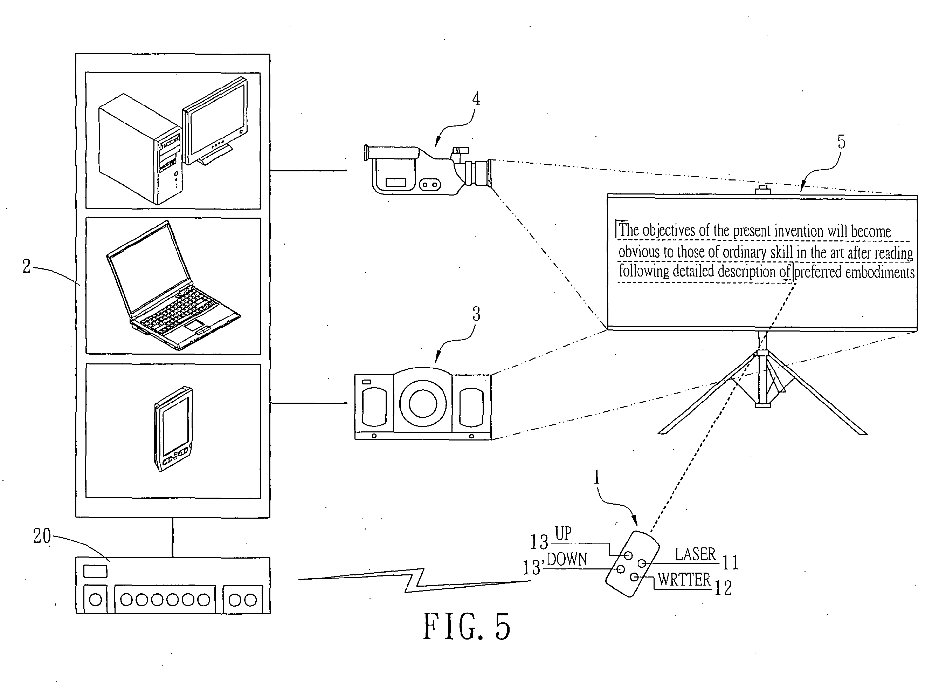

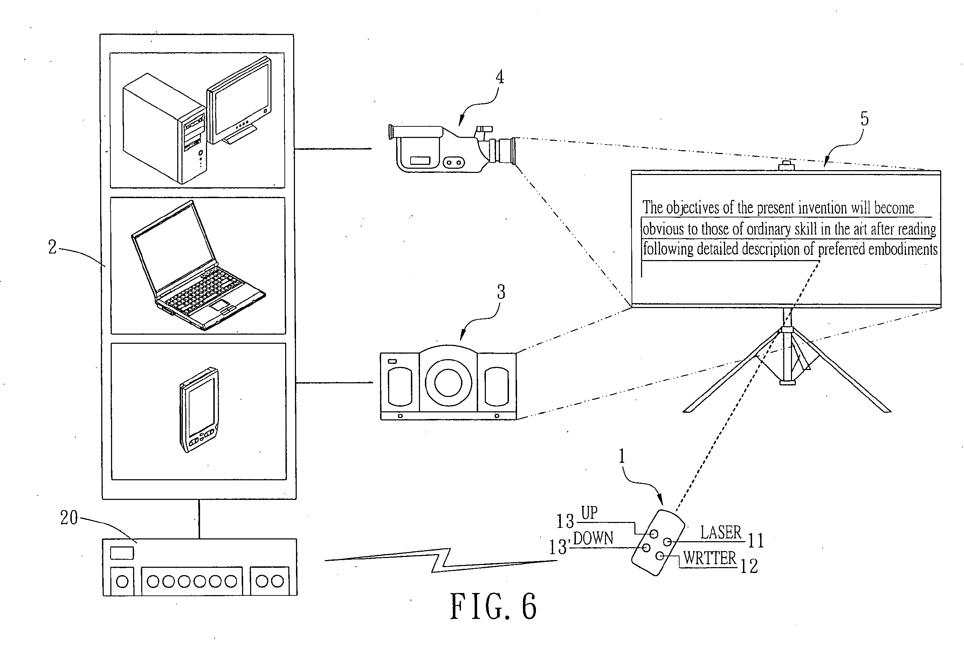

The central processing device 2 includes the functions of recording and storing data and calculation and process data. In one embodiment, the central processing device 2 includes a personal computer, a portable computer, or a digital data assistant, for example. A wireless receiving control device 20 may be built in or externally connected to the he central processing device 2 for receiving the control signal transmitted from the hand-held control unit 1. After calculation and process by the central processing device 2, a control signal is generated to control and activate the projection device 3 for displaying image data on the display device 5. Or alternatively, the image extraction device 4 is activated and controlled to extract the marking made by the laser beam and displayed on the display device 5. As shown in Figure 5, the extracted image data is then transmitted to the central processing device 2 to perform image calculation and process by an application program in real time. The calculation result is recorded and stored in the central processing device 2. The image data containing the manuscript of marking may also be displayed on the display device 5 by the projection device 3 as shown in Figure 6.

The wireless receiving control device 20 includes a RF wireless receiving device or a wireless network access point, for example. The electronic circuit structure of the central processing device 2 is illustrated in Figure 2. As shown, the circuit includes a wireless receiving circuit 21, a system control circuit 22, a data processing circuit 23 and a computer interface circuit 24. The wireless receiving circuit 21 is used to receive the control signal transmitted from the hand-held control unit 1 and transmit the control signal to the system control circuit 22 and the data processing circuit 23 via the computer interface circuit 24. The data processing circuit 23 then processes the data into an image allowing the projection device 3 to project, or performs calculation of image extracted by the image extraction device 4. The computer interface circuit 24 provides the signal communication between the wireless receiving circuit 21 and the data processing circuit 23 and the system control circuit 22.

The projection device 3 is either built in or externally connected to image signal output terminal of the central processing device 2. The image signal output by the central processing device 2, including the projection data and the processed data containing the marking made by the laser beam, is projected to the display device 5 by the projection device 3. The projection device 3 includes a projector or an internal-projection type projector.

The image extraction device 4 is built in or externally connected to an image signal input terminal of the central processing device 2 for extracting marking made by the laser beam on the image displayed by the display device 5. The optical locus of the extracted data is then processed and calculated by the application program to form graph, text or a combination thereof. In the example as shown in Figure 6, the image extraction speed is about 30-120 times per second. It will be appreciated that the image extraction speed may be adjusted higher or lower than this range according to specific requirement. In one embodiment, the image extraction device 4 includes a CCD or CMOS image extraction device or other photographic or video device such as webcam or digital video.

The above provides the description of exemplary real-time identifying and recording system for laser manuscript. The operation process of the system will be further described as follows.

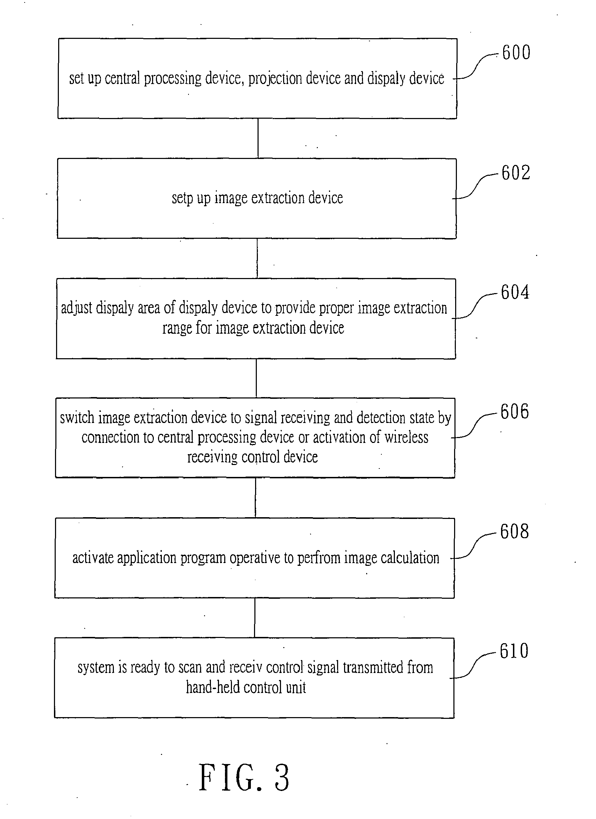

Referring to Figure 3, the central processing device 2 and the projection device 3 are disposed at predetermined locations, and the display device 5 is then positioned for receiving the image projected from the projection device 3 in step 600. The image extraction device 3 is also positioned for extracting image displayed by the display device in step 602. The display area of the display device 5 is adjusted to provide a proper image extraction range for the extraction device 3 in step 604. Such image extraction range corresponds to the display area range on which the projection device 4 projects image. The image extraction device 3 is then switch to a signal receiving and detection state by connection to the central processing device 2 or activation of the wireless receiving control device 20 in step 606. The application program operative to perform image calculation is then activated in step 608. Thereby, the system is ready to scan and receive the control signal transmitted from the hand-held control unit 1 in step 610.

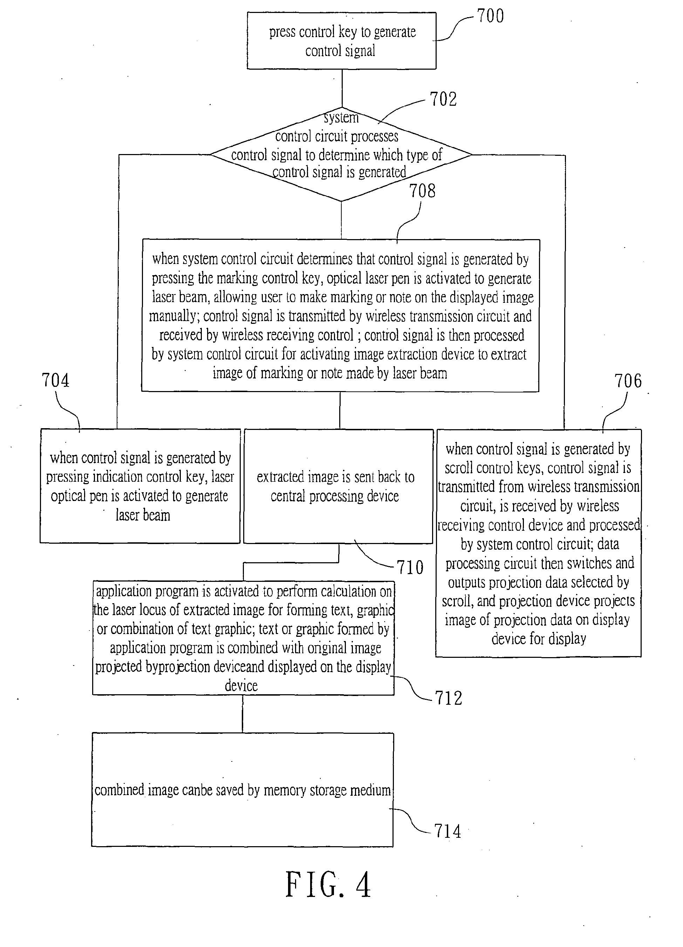

Figure 4 shows the operation process of controlling the hand-held control unit 1 to perform the real-time identifying and recording operation. As shown, at least one of the control keys 11, 12, 13 and 13' is pressed to generate a control signal in step 700. The system control circuit 15 processes the control signal and determines which type of control signal is generated in step 702. When the control signal is generated by pressing the indication control key 11, the laser optical pen 17 is activated to generate a laser beam in step 704. The laser beam can be used to indicate the image projected by the projection device 4 and displayed on the display device 5. When the system control circuit 15 determines that the control signal is generated by the scroll control keys 13 and 13', the control signal is transmitted from the wireless transmission circuit 16. The control signal is received by the wireless receiving control device 20 and processed by the system control circuit 22 of the system central processing device 2. The data processing circuit 23 then switches and outputs the projection data selected by scroll, and the projection device 3 projects the image of the projection data on the display device 5 for display in step 706.

When the system control circuit 15 determines that the control signal is generated by pressing the marking control key 12, the optical laser pen 17 is activated to generate a laser beam, allowing the user to make marking or note on the displayed image manually. Meanwhile, the control signal is transmitted by the wireless transmission circuit 16 and received by the wireless receiving control device 20 of the central processing device 2. The control signal is then processed by the system control circuit 22 for activating the image extraction device 4 to extract the image of the marking or note made by the laser beam in step 708. The extracted image is then sent back to the central processing device 2 in step 710. The application program is activated to perform calculation on the laser locus of the extracted image for forming text, graphic or combination of text graphic. The text or graphic formed by the application program is then combined with the original image projected by the projection device 4 and then displayed on the display device 5 in step 712. The combined image can then be saved by memory storage medium in step 714. The steps 700 to 714 can be iterated to use the laser beam for making marking and note during a meeting, and to identify the projection image and record the marking and image in a real time.

While an illustrative and presently preferred embodiment of the invention has been described in detail herein, it is to be understood that the inventive concepts may be otherwise variously embodied and employed and that the appended claims are intended to be construed to include such variations except insofar as limited by the prior art.

## Claims

1. A system for real-time identifying and recording a laser manuscript made in a briefing, comprising:
a hand-held control unit (1) having a control signal transmission device, the hand-held control unit (1) comprising at least an indication control key (11) and a marking control key (12) ;
a central processing device (2) having a receiving control device (20);
an image extraction device (3) connected to the central processing device (2);
a projection device (4) connected to the central processing device; and
a display (5) device positioned with respect to the projection device (4).

2. The system of Claim 1, further comprising an application program stored in the central processing device (2) for performing calculation on optical locus of a laser beam generated by the hand-held control unit (1) and projected on the display device, so as to form a text, graphic or a combination thereof.

3. The system of Claim 1, wherein the hand-held control unit (1) comprises:
a control interface circuit (14) connected to the indication control key and the marking control key;
a system control circuit (15) for generating a control signal according to input of the control interface circuit (14);
a wireless transmission circuit (16) to transmit the control signal; and
a laser optical pen (17) for generating an optical beam for indication or marking.

4. The system of Claim 1, wherein the receiving control device (20) includes a wireless receiving device built in or external connected to the central processing device (2).

5. The system of Claim 1, wherein the central processing device (2) includes:
a wireless receiving circuit (21) for receiving the control signal generated by the hand-held control unit;
a data processing circuit to calculation on an image projected by the projection device and an image extracted by the extraction device;
a system control circuit (22) to control operation of image projection and image extraction of the projection device and the image extraction device; and
a computer interface circuit (24), providing connection between the wireless receiving circuit (21) to the data processing circuit and the system control circuit (22).

6. The device of Claim 1, wherein the projection device (4) includes a projector or an internal-projection-type projector built in the central processing device (2) or connected to a signal output terminal of the central processing device (2).

7. The device of Claim 1, wherein the image extraction device (3) includes a CCD, a CMOS, a camcorder, a webcam or a digital camcorder built in the central processing device or connected to a signal input terminal of the central processing device.

8. A method for real-time identifying and recording briefing, comprising:
providing a control unit (1) to generate a control signal and a laser beam in response to the control signal;
providing a central processing device (2) to receive and process the control signal; projecting an image to a display device (5) according to the control signal, and projecting the laser beam on the image displayed by the display device (5);
extracting the image displayed on the display device (5) and an optical locus of the laser beam projected on the display device (5);
processing the extracted image and optical locus by an application program installed in the central processing device (2); and
recording the processed result of the image and the optical locus.

9. The method of Claim 8, further comprising a step of projecting the processed result of the image and optical locus on the display device (5).

10. The method of Claim 8, further comprising forming a text, a graph or a combination of graph and text by processing the optical locus of the laser beam.
